# EUROPEAN PATENT APPLICATION

(11) **EP 3 449 988 A1**
(43) Date of publication of application: **06.03.2019**
(21) Application number: 17897073.7
(22) Date of filing: 16.02.2017
(51) Int. Cl.: A63H 33/04

(54) **ELECTRONIC TOY BLOCK SYSTEM**

(71) Applicant: Makeblockco., Ltd., Shenzhen, Guangdong 518000 (CN)
(72) Inventor: WANG, Jianjun, Shenzhen Guangdong 518000 (CN)
(74) Representative: dompatent von Kreisler Selting Werner - Partnerschaft von Patent- und Rechtsanwälten mbB
(86) International application number: PCT/CN2017/073818
(87) International publication number: WO 2018/148911

(57) **Abstract**

An electronic building block system includes at least one set of power source modules (10) for supplying electric energy, at least one set of input modules (20) electrically connected to the power source modules (10) and used for inputting data and signals, at least one set of output modules (30) electrically connected to the power source modules (10) and used to receive data and signal control of the input modules (20) to output corresponding signals and at least one communication module (40) selectively connected to the power source modules (10); and the communication module (40) is connected or disconnected so that communication between the electronic building block system and an external terminal (50) is connected to or disconnected, so that the electronic building block system is in a non-programmable state or a programmable state. The electronic building block system is in the non-programmable state or the programmable state so as to meet actual use requirements of the electronic building block system by people at different experience levels.

## Description

### Technical Field

The present invention belongs to the technical field of electronic products, and in particular, to an electronic building block system.

### Background

In people's daily life, a wide variety of electronic devices and electronic signals can be seen everywhere, such as mobile phones, computers, WIFI, smart, cloud and Internet of Things, etc., and people are using them every day. Every day, there are contacts, but most people do not know how these electronic devices work and how to manufacture their electronic devices. All the interactions of these electronic devices and electronic signals are limited to passive consumption. In order to enable people to personally experience the working process of these electronic devices and electronic signals during daily consumption and use, intelligent circuit modules emerge for toy DIY creative assembly and teaching application. This kind of intelligent circuit module does not require users having specialized knowledge, but only understanding the function and the application. Ample electronic circuit functions can be achieved by a simple mutual assembly. Materials such as the Lego building blocks, paper, wood, plastic, clay, 3D printing technology are used to perform DIY materials for creative modeling, which allows light, sound, buttons, and other electronic components to be assembled. It is simple for children, young students, designers, non-engineers, and others who lack the necessary experience.

However, after the assembly of these intelligent circuit modules, it can only meet the needs of people who have less experience, and cannot meet the needs of some people with higher skills, that is, cannot make further improvements in the assembly.

### Summary

Embodiments of the present invention provide an electronic building block system with optional work modes, which aims to solve a problem that in the prior art, an intelligent circuit module after assembly cannot meet the needs of people at different experience levels at the same time.

The present invention provides an electronic building block system, including at least one set of power source modules for supplying electric energy, at least one set of input modules electrically connected to the power source modules and used for inputting data and signals, at least one set of output modules electrically connected to the power source modules and used to receive data and signal control of the input modules to output corresponding signals, and at least one communication module selectively connected to the power source modules, wherein the communication module is connected or disconnected so that communication between the electronic building block system and an external terminal is connected to or disconnected; when the communication module is connected, the electronic building block system is communicated with the external terminal, and the external terminal performs programmable control of the input module; when the communication module is disconnected, the electronic building block system is in an offline state, the input module is in collocation control with the output module.

Further, the power source modules, the input modules, the output modules, and the communication modules have built-in micro-control units running independently.

Further, a communication mode between each of the input modules and each of the output modules is a digital form.

Further, the power source modules, the input modules, the output modules and the communication modules are provided with a male joint and a female joint that are respectively connected to the to-be-connected apparatus; and its own male joint is connected to the female joint of the to-be-connected apparatus or its own female joint is connected to the male joint of the to-be-connected apparatus so as to implement signal connection between them.

Further, the electronic building block system further includes a connecting line for electrically connecting any two electronic building blocks; said electronic building block is each said power source module, each said input module, each said output module, and each said communication modules. Two ends of the connecting line are provided with a female connector and a male connector mating with the male joint and the female joint.

Further, the male connector has a same structure with the male joint, and the female connector has a same structure with the female joint.

Further, there is a height difference between any two of the electronic building blocks connected by the connecting line.

Further, two electronic building blocks connected by the connecting line are on a same plane, and there is space between the male connector and the female connector of the two electronic building blocks.

Any two adjacent modules selected from said power source module, each input module, each output module and each communication module, are interconnected via their respective male connector and female connector. Further, one said power source modules is at least configured with one said input module and one said output module.

Further, each of the communication modules is internally provided with a wireless communication module or a wired communication module.

Further, the wireless communication module is a Bluetooth apparatus or a WIFI apparatus that is in a communication connection with the external terminal.

Beneficial effects of the embodiments of the present invention, compared to the prior art, are that: in this electronic building block system, the power source module, the input module, and the output module are interconnected, and the communication module is selectively connected, so as to compose a functional system with input and output functions; moreover, when the communication module is connected, the communication module may be communicated or disconnected so that the electronic building block system is connected or disconnected with the external terminal, thereby implementing an offline work mode and an online work mode of the electronic building block system. The two work modes correspond to different application methods, that is, when the electronic building block system is in an offline work mode, the electronic building block system is in a non-programmable state, and when the electronic building block system is in an online work mode, the electronic building block system is in a programmable state. The electronic building block system is in a non-programmable state or a programmable state so as to meet actual use requirements of the electronic building block system by people at different experience levels.

### Brief Description of the Drawings

In order to more clearly explain technical solutions in the embodiments of the present invention, the drawings used in the description of the embodiments or the prior art will be briefly described. Obviously, the drawings in the following description are only some embodiments of the present invention. A person of ordinary skill in the art can also obtain other drawings based on these drawings without any creative efforts.
FIG. 1 is a schematic structural diagram of an electronic building block system according to Embodiment 1 of the present invention;
FIG. 2 is another schematic structural diagram of an electronic building block system according to this embodiment of the present invention;
FIG. 3 is another further schematic structural diagram of an electronic building block system according to another embodiment of the present invention;
FIG. 4 is a local explosion view of the electronic building block system of FIG. 3 in one direction; and
FIG. 5 is a local explosion view of the electronic building block system of FIG. 3 in another direction.

**Description of Reference Numbers**

| | | | |
|---|---|---|---|
| 10 | Power source module | 50 | External terminal |
| 20 | Input module | | |
| 30 | Output module | 60 | Connecting line |
| 40 | Communication module | 62 | Female connector |
| 15 | Male joint | 65 | Male connector |
| 25 | Female joint | | |

### Detailed Description

Embodiments of the present invention will be described in detail in the following. Examples of the embodiments are shown in the accompanying drawings. The same or similar reference numerals throughout the drawings represent the same or similar elements or elements having the same or similar functions. The embodiments described below with reference to the accompanying drawings are exemplary and are intended to explain the present invention, but should not be considered as limiting the present invention.

In the description of the present invention, it is to be understood that orientations or positional relationships indicated by the terms "length", "width", "up", "down", "front", "back", "left", "right", "horizontal", "top", "bottom" "inner", "outer", etc. are based on the orientation or positional relationship shown in the drawings and are merely for ease of description of the present invention and simplifying description, and not that the indicated or implied device or element must have a particular orientation, be constructed and operated in a particular orientation, and therefore should not be considered to limit the present invention.

Furthermore, the terms "first" and "second" are used for descriptive purposes only, and are not to be considered as indicating or implying relative importance or implicitly indicating the number of indicated technical features. Thus, features defined as "first", "second" may explicitly or implicitly include one or more of the features. In the description of the present invention, the meaning of "plurality" is two or more, unless specifically defined otherwise.

In the present invention, the terms "mounting", "interconnecting", "connecting", "fixing" and the like should be understood in a broad sense unless specifically defined or limited. For example, it may be a fixed connection or a detachable connection, or integrated; it can be mechanically connected or electrically connected. It can be directly connected or indirectly connected through an intermediate medium. It can be the internal communication of two components or the interaction between two components. A person of ordinary skill in the art can understand specific meanings of the above terms in the present invention according to specific situations.

In order to make the objectives, technical solutions, and advantages of the present invention clearer and more comprehensible, the following further describes the present invention in detail with reference to the accompanying drawings and embodiments.

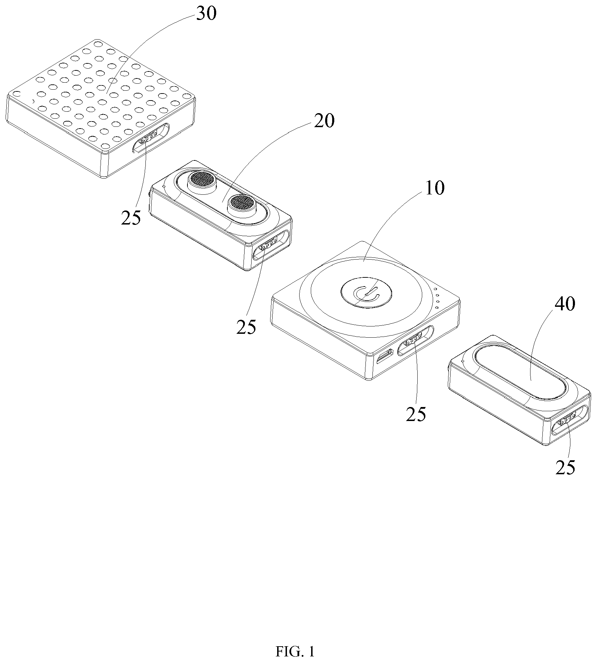

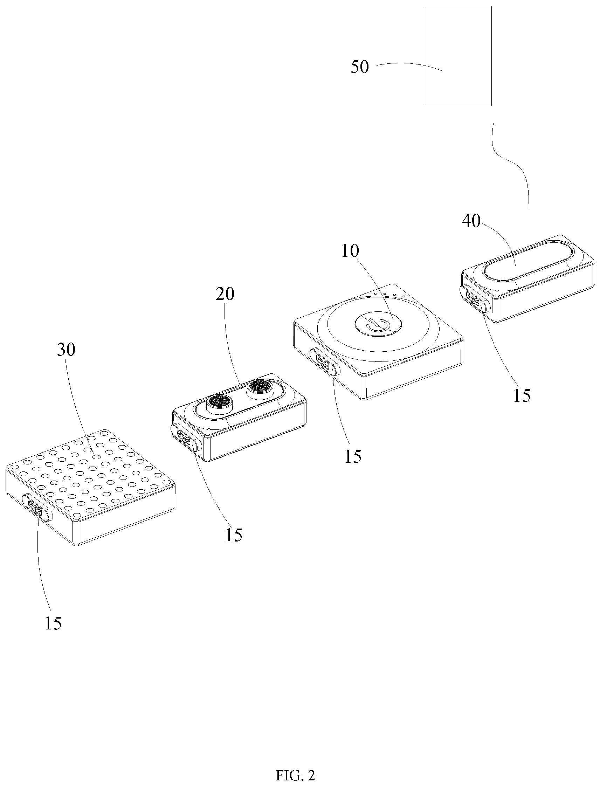

Referring to FIG. 1 and FIG. 2, an electronic building block system provided in this embodiment of the present invention includes at least one set of power source modules 10 for supplying electric energy, at least one set of input modules 20 electrically connected to the power source modules 10 and used for inputting data and signals, at least one set of output modules 30 electrically connected to the power source module 10 and used to receive data and signal control of the input module 20 to output corresponding signals, and at least one communication module 40 selectively connected to the power source module 10, where the communication module 40 is connected or disconnected so that communication between the electronic building block system and an external terminal 50 is connected to or disconnected; when the communication module 40 is connected, the electronic building block system is communicated with the external terminal 50, and the external terminal 50 performs programmable control of the input module 20; and when the communication module 40 is disconnected, the electronic building block system is in an offline state, and the input module 20 is in collocation control with the output module 30.

In the electronic building block system provided by this embodiment of the present invention, the power source module 10, the input module 20, and the output module 30 are interconnected, and the communication module 40 is selectively connected, so as to compose a functional system with input and output functions; moreover, when the communication module 40 is connected, the communication module 40 may be communicated or disconnected so that the electronic building block system is connected or disconnected with the external terminal 50, thereby implementing an offline work mode and an online work mode of the electronic building block system. The two work modes correspond to different application methods, that is, when the electronic building block system is in an offline work mode, the electronic building block system is in a non-programmable state, and when the electronic building block system is in an online work mode, the electronic building block system is in a programmable state. The electronic building block system is in a non-programmable state or a programmable state so as to meet actual use requirements of the electronic building block system by people at different experience levels.

When the communication module 40 is not connected selectively, the entire electronic building block system is in a non-programmable state.

When the electronic building block system is in the non-programmable state, after the power source modules 10, the input modules 20, and the output modules 30 are connected, the input modules 20 control the work of the output modules 30, and the control method is fixed; for example, the input module 20 is a switch and the output module 30 is an LED lamp, after connection, the input module 20 is pressed so as to implement the turning on and off of the LED lamp. The electronic building block system can be arbitrarily matched, which is convenient in use and widely applied, and suitable for people who lack programming experience or do not need to make corresponding adjustment on output of the output module 30.

When the electronic building block system is in the programmable state, after the power source modules 10, the input modules 20, the output modules 30, and the communication modules 40 are connected, each of the modules is in communication with an external terminal 50 (such as a mobile phone or a tablet computer) by means of the communication module 40; each of the modules can perform program control of work logic on the modules by means of applications installed on the external terminal 50, so as to control interaction between the modules. For example, the input module 20 is a switch and the output module 30 is an LED lamp; after connection, when the input module 20 is accessed, by editing the work logic of the input module 20 on the external terminal 50, the switch may be changed from large to small or from small to large; when the output module 30 is accessed, a display state of the output module 30 can be edited by programming, for example, the change of the LED lamp, and the LED lamp may display corresponding different colors by means of control from large to small or from small to large by the input module 20.

In this embodiment, the power source modules 10, the input modules 20, the output modules 30, and the communication modules 40 are independently disposed electronic building blocks, and different or same electronic building blocks are connected to compose an electronic building block system with certain functions. For example, an ultrasonic sensor can be individually used as matrix detection element; when the ultrasonic sensor is connected with a buzzer, an alarm with a voice broadcast function is composed. A user can fully use creation to make various combinations when using.

In this embodiment, the power source modules 10 is used for providing power source, and may be a power source module 10, a battery, a solar battery, or a discharge protection circuit. The input module 20 is used for data and information input, and may be a pulse module, a pressure sensor module, an access module, an input record module, a level meter module, a button module, a temperature module, an accelerometer module, a storage module, and a timer module. The output module 30 is used for feeding back visual, physical, and sound changes brought by input signals, and may be a motion module, a vibration motor module, a fan module, a RGB LED module, an LED module, a bar light column module, a loudspeaker module, a direct-current motor, a RGB lamp module, an LED matrix module, a lamp bar module, a microphone and loudspeaker module and the like. The communication module 40 is used for communication connection, and may be a wired module or a wireless communication module 40. The wireless communication module 40 may be a WIFI module or a Bluetooth module.

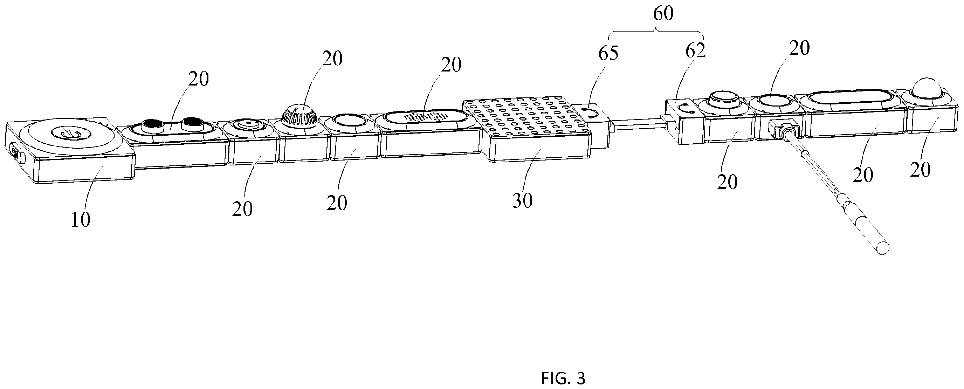

Referring to FIG. 1 and FIG. 3, further, the power source modules 10, the input modules 20, the output modules 30, and the communication modules 40 have built-in micro-control units running independently. The electronic building block system sets independently running micro-control units in the power source modules 10, the input modules 20, the output modules 30, and the communication modules 40, so as to compose a new functional module when two different or same modules are connected. For example, multiple LED lamps are connected in parallel to compose a lamp strape or a lamp with different display effects.

The electronic building block system sets micro-control units running independently inside the modules, so that the modules have independent work capability, thereby enhancing function extension of the electronic building block system. Further, a communication mode between each of the input modules 20 and each of the output modules 30 is a digital form. The communication method between the input modules 20 and the output modules 30 is in a digital form for transmission, and does not need other external connectors. The input modules 20 may directly output signal values so as to reduce workload of a user. In addition, using the digital communication method can implement identification between modules, and the configuration is more flexible. It also has fault self-diagnosis functions. The digital form for communication refers to transmitting messages by digital forms or modulating carrier signals by using digital forms and then transmitting.

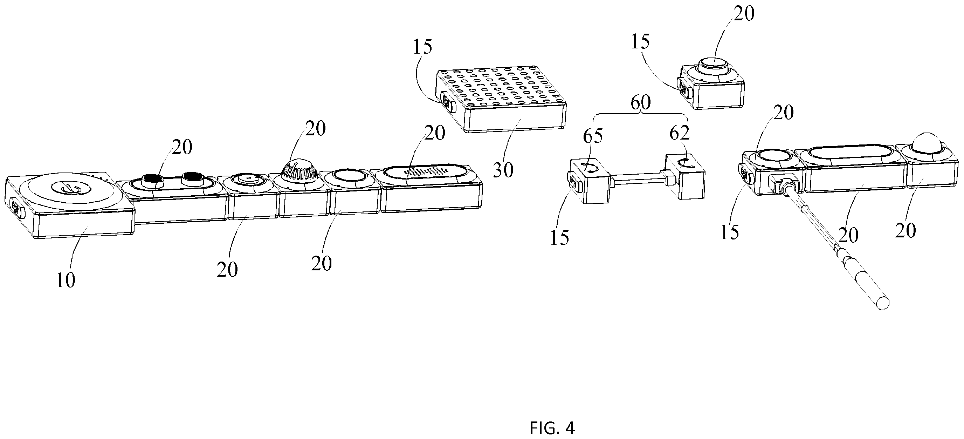

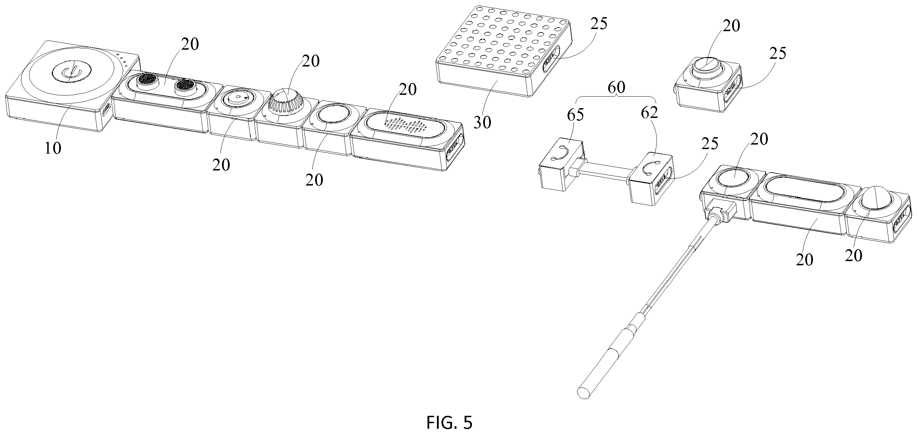

Referring to FIG. 3 to FIG. 5, further, the power source modules 10, the input modules 20, the output modules 30 and the communication modules 40 are provided with a male joint 15 and a female joint 25 that are respectively connected to the to-be-connected apparatus; its own male joint 15 is connected to the female joint 25 of the to-be-connected apparatus or its own female joint 25 is connected to the male joint 15 of the to-be-connected apparatus so as to implement signal connection between them. It can be understood that, every respect power source module 10, every respect input modules 20, every respect output modules 30, and every respect communication modules 40 share the same structure for their male joints 15, and also for their female joints 25. The male joint 15 and the female joint 25 mutually plugged into each other, to make the two modules be intercommunicated with each other. Male joints 15 and the female joints 25 of every modules can be universally used therefore, to enable a convenient connection. Referring to FIG. 3 to FIG. 5, further, the electronic building block system further includes a connecting line 60 for electrically connecting any two electronic building blocks; said electronic building block is each said power source module 10, each said input module 20, each said output module 30, and each said communication modules 40. Two ends of the connecting line 60 are provided with a female connector 62 and a male connector 65 mating with the male joint 15 and the female joint 25. The connecting line 60 sets the male connector 65 and the female connector 62, so that the male connector 65 and the female connector 62 can be interconnected with the female joint 25 and the male joint 15 of the two electronic building blocks. The connected two electronic building blocks are spaced in spatial positions. The connecting line 60 is used to ensure normal connection of the two electronic building blocks. It facilitates to extend use space of the electronic building blocks, which will then not merely limited to a certain plane where the electronic building blocks are disposed in parallel.

Referring to FIG. 3 to FIG. 5, further, the male connector 65 has a same structure with the male joint 15, and the female connector 62 has a same structure with the female joint 25. The male connector 65 of the connecting line 60 has a same structure with the male joint 15 of the electronic building stock while the female connector 62 of the connecting line 60 has a same structure with the female joint 25 of the electronic building stock, so that the connecting line 60 may be plugged into the electronic building block arbitrarily, thereby ensuring commonality of the male connector 65, the male joint 15, the female connector 62, and the female joint 25, so that each of the electronic building blocks realizes multi-directional and multi-dimensional fast connection, ensuring correctness of communication. In addition, the connecting line 60 is set so that during the electronic block building process, without constrained by the space position, more building block combinations can be created with their own creativity, which can reflect the education of the electronic blocks in the classroom teaching and the role of learning. In the family life, you can achieve your own DIY smart home; in the outdoors, you can achieve natural science education; in entertainment, different ideas can be achieved, and the scope of application is greatly increased. Referring to FIG. 3 to FIG. 5, further, there is a height difference between any two of the electronic building blocks connected by the connecting line 60. The connecting line 60 is used to connect the two electronic building blocks with a height difference to realize the construction of a three-dimensional space, expand the range of the connection, and ensure that the electronic blocks can be freely combined.

Referring to FIG. 3 to FIG. 5, further, two electronic building blocks connected by the connecting line 60 are on a same plane, and there is space between the male connector 15 and the female connector 25 of the two electronic building blocks. When two electronic building blocks required to be connected are on a same plane, however with a certain gap between, and therefore cannot be directly connected, the connecting line 60 can be utilized to simply and fastly connect them, ensuring for a connection with convenience and reliability. Any two adjacent modules selected from said power source module 10, each input module 20, each output module 30 and each communication module 40, are interconnected via their respective male connector and female connector. Because the male joint 15 and the female joint 25 of each module have commonality, the two adjacent modules are connected and electrically connected by the male joint 15 and the female joint 25, which is simple and convenient.

In this embodiment, the outline sizes of the electronic building blocks are: length × width=24mm×24mm, length × width=24mm×48mm or length × width=48mm×48mm. The sizes of the electronic building blocks are set so as to ensure that the electronic elements of the functional modules can be installed in the modules and work normally.

Referring to FIG. 1 to FIG. 5, further, one said power source modules 10 is at least configured with one said input modules 20 and one said output modules 30. It can be understood that in the electronic building block system, one said power source modules 10 is matched with at least one input module 20 and one output module 30, so as to establish an electronic building block combination with a certain function, which has simple structures and can be used conveniently. Referring to FIG. 1 to FIG. 5, further, each of the communication modules 40 is internally provided with a wireless communication module 40 or a wired communication module 40. The communication module 40 may be a wired communication module 40 or a wireless communication module 40. Preferably, the wireless communication module 40 is a Bluetooth apparatus and a WIFI apparatus in communication connection with the external terminal 50. The electronic building block system sets the communication module 40 so as to perform communication connection with the external terminal 50, and facilitate to implement programmable control.

The foregoing descriptions are merely preferred embodiments of the present invention and are not intended to limit the present invention. Any modification, equivalent replacement and improvement made within the spirit and principle of the present invention shall be within the protection scope of the present invention.

## Claims

1. An electronic building block system, comprising at least one set of power source modules for supplying electric energy, at least one set of input modules electrically connected to the power source modules and used for inputting data and signals, at least one set of output modules electrically connected to the power source modules and used to receive data and signal control of the input modules to output corresponding signals, and at least one communication module selectively connected to the power source modules, wherein the communication module is connected or disconnected so that communication between the electronic building block system and an external terminal is connected to or disconnected; when the communication module is connected, the electronic building block system is communicated with the external terminal, and the external terminal performs programmable control of the input modules; and when the communication module is disconnected, the electronic building block system is in an offline state, and the input modules are in collocation control with the output modules.

2. The electronic building block system according to claim 1, **characterized in that** the power source modules, the input modules, the output modules, and the communication modules have built-in micro-control units running independently.

3. The electronic building block system according to claim 2, **characterized in that** a communication mode between each of the input modules and each of the output modules is a digital form.

4. The electronic building block system according to claim 1, **characterized in that** the power source modules, the input modules, the output modules and the communication modules are provided with a male joint and a female joint that are respectively connected to the to-be-connected apparatus; and its own male joint is connected to the female joint of the to-be-connected apparatus or its own female joint is connected to the male joint of the to-be-connected apparatus so as to implement signal connection between them.

5. The electronic building block system according to claim 4, **characterized by** further comprising a connecting line for electrically connecting any two electronic building blocks; said electronic building block is each said power source module, each said input module, each said output module, and each said communication modules; two ends of the connecting line are provided with a female connector and a male connector mating with the male joint and the female joint.

6. The electronic building block system according to claim 5, **characterized in that** the male connector has a same structure with the male joint, and the female connector has a same structure with the female joint.

7. The electronic building block system according to claim 5, **characterized in that** there is a height difference between any two of the electronic building blocks connected by the connecting line.

8. The electronic building block system according to claim 5, **characterized in that** two electronic building blocks connected by the connecting line are on a same plane, and there is a space between the male connector and the female connector of the two electronic building blocks.

9. The electronic building block system according to claim 4, **characterized in that** any two adjacent modules selected from said power source module, each input module, each output module and each communication module, are interconnected via their respective male connector and female connector.

10. The electronic building block system according to claim 4, **characterized in that** one said power source module is at least configured with one input module and one output module.

11. The electronic building block system according to claim 1, **characterized in that** each of the communication modules is internally provided with a wireless communication module or a wired communication module.

12. The electronic building block system according to claim 11, **characterized in that** the wireless communication module is a Bluetooth apparatus or a WIFI apparatus that is in a communication connection with the external terminal.
